# FASCICULE DE BREVET EUROPEEN

(11) **EP 0 690 537 B1**
(45) Date de publication et mention de la délivrance du brevet: **19.05.1999**
(21) Numéro de dépôt: 95401485.8
(22) Date de dépôt: 23.06.1995
(51) Int. Cl.: H02B 1/052, H01H 50/04

(54) **Contacteur à verrou de fixation sur un rail**
Schaltschutz mit Rasteinrichtung für Schienenmontage
Contactor with latching means for rail mounting

(30) Priorité: 27.06.1994 FR 9407863
(43) Date de publication de la demande: 03.01.1996
(73) Titulaire: ABB CONTROL, F-69680 Chassieu (FR)
(72) Inventeur: Portier, Alain, F-64003 Lyon (FR)
(74) Mandataire: Laget, Jean-Loup

(56) Documents cités:
- EP-A- 0 075 661
- EP-A- 0 332 535
- DE-A- 2 712 893
- DE-A- 3 149 310
- DE-U- 1 991 014
- DE-U- 8 815 851

## Description

L'invention concerne un contacteur à verrou de fixation sur un rail profilé.

Plus généralement, l'invention concerne un appareil mécanique de connexion à commande électromagnétique du type contacteur, comprenant une embase de fixation, faisant partie intégrante de son enveloppe, munie d'un verrou élastique permettant l'accrochage dudit contacteur sur un rail profilé.

Les appareils de ce type ont en général une embase de forme sensiblement rectangulaire, présentant au voisinage de ses coins des trous débouchants pour le passage de vis de fixation sur un support tel qu'une plaque ou une tôle. La fixation est usuellement assurée par deux vis disposées selon l'une ou l'autre des diagonales de l'embase.

Pour laisser libres les coins de l'embase recevant les vis de fixation, le verrou occupe, dans les appareils de type connu, une position médiane par rapport à l'embase de fixation.

Lorsque le contacteur est associé à un relais thermique de protection pour constituer un démarreur moteur, les broches du relais reliées aux bornes inférieures du contacteur constituent un obstacle à l'accessibilité de ce verrou par un outil de déverrouillage tel qu'un tournevis. Les conditions nécessitant une opération de déverrouillage d'un démarreur installé, bien que peu fréquentes, peuvent résulter d'une détérioration de la bobine du contacteur ou d'un besoin de réorganisation de l'équipement dans lequel il est utilisé.

Le brevet FR-A-2 625 603 apporte une réponse à ce problème en proposant deux actions : l'une sur le relais thermique en prévoyant un couloir de dégagement en face du verrou pour l'introduction de l'outil de déverrouillage, l'autre sur le contacteur en réalisant un verrou dont l'accès est déporté par rapport à l'axe du contacteur.

Ceci impose, en contrepartie, des modifications coûteuses sur des gammes de relais thermiques existantes ainsi que l'obligation de faire dépasser le verrou de l'embase de fixation, rendant ainsi l'encombrement de l'appareil plus important lorsqu'il est fixé par vis et que le verrou n'a plus d'intérêt fonctionnel.

Le document DE-A-27 12 893 décrit un contacteur à verrou de fixation sur un rail conforme au préambule de la revendication 1.

La présente invention se propose de fournir à l'utilisateur, en particulier au personnel de maintenance, un ensemble démarreur déverrouillable aisément, compatible avec les relais standards et n'apportant pas d'encombrement supplémentaire.

Un autre but de l'invention est de concentrer en une seule zone les problèmes d'accessibilité du tournevis à la fois aux vis de fixation et au verrou, et donc de simplifier les formes de l'embase.

L'invention a pour objet un contacteur à verrou de fixation sur un rail, comportant une embase sensiblement rectangulaire présentant au voisinage de ses coins des trous pour le passage de vis de fixation sur un support, et munie d'un verrou pour sa fixation sur un rail profilé, ledit verrou étant susceptible d'être ouvert à l'aide d'un outil pour libérer l'embase du rail, caractérisé en ce qu'une partie du verrou constitue une paroi extérieure pour l'un au moins desdits trous de l'embase, le trou lui-même constituant une encoche destinée à recevoir ledit outil.

Selon d'autres caractéristiques de l'invention :
- la partie du verrou constituant la paroi extérieure d'un trou est recourbée en forme de crochet ;
- la partie du verrou constituant la paroi extérieure d'un trou présente du côté intérieur deux faces perpendiculaires.

D'autres avantages de l'invention ressortent de la description qui suit faite avec référence au dessin annexé sur lequel :
La figure 1 : représente la vue du côté droit d'un démarreur, composé d'un contacteur selon l'invention et d'un relais thermique ;
La figure 2 représente la vue de dessus du même appareil avec un arrachement partiel ;
La figure 3 est une vue agrandie du trou débouchant de la figure 2 dont la paroi extérieure est constituée par une partie du verrou, selon l'invention.

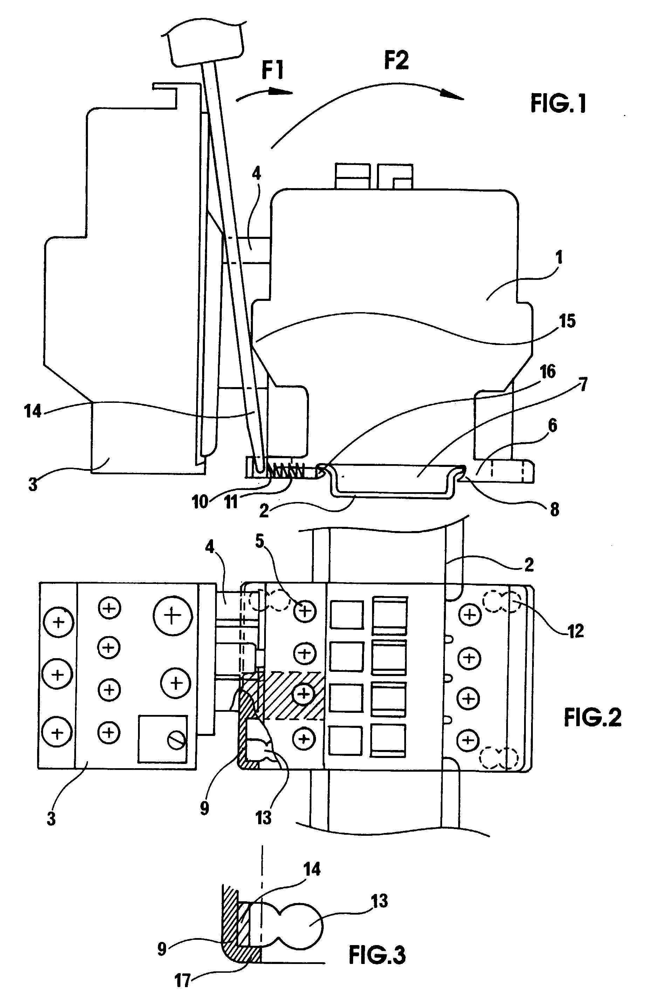

Sur la figure 1, un contacteur 1, destiné à commander la mise sous tension d'une charge triphasée telle qu'un moteur, est fixé sur un rail profilé 2. Un relais thermique 3, destiné à protéger la charge contre des surcharges prolongées de courant, est fixé par trois broches 4 dans les bornes inférieures 5 du contacteur.

L'embase 6 du contacteur comporte un évidement 7 limité par un rebord fixe 8 d'un côté, et, de l'autre, par une pièce mobile élastiquement 9, dénommée verrou, qui coopère avec le rebord 8 pour maintenir le contacteur 1 sur le rail 2. L'élasticité du verrou est réalisée le plus souvent par un ressort 11, intégré dans le verrou, prenant appui sur un bossage 10 de l'embase et poussant au repos le verrou en butée contre une forme appropriée de l'embase.

Cette embase comporte également quatre trous 12, servant au passage de vis de fixation du contacteur 1, lorsqu'on désire le monter sur une plaque épaisse ou une tôle mince.

Ces trous peuvent être cylindriques, ou oblongs, si on veut permettre différents entraxes pour les points de fixation.

Le verrou 9 peut être actionné pour libérer le contacteur 1 du rail 2 par un outil du genre tournevis à lame plate 14, dont la lame peut s'engager entre le relais 3 et le contacteur 1 grâce à l'écartement existant entre ces deux appareils. Cet écartement est prévu pour autoriser la fixation par vis, sur un support tel qu'une plaque ou une tôle, de l'ensemble contacteur-relais précédemment solidarisé.

Selon l'invention, l'un des trous de l'embase, par exemple le trou 13, a sa paroi extérieure constituée par une partie du verrou 9 (Fig. 2), de préférence recourbée en forme de crochet. Ce trou 13 constitue ainsi une encoche de manoeuvre pour le verrou 9.

La lame 14 du tournevis s'engage dans cette encoche (Fig. 1). Actionnée alors dans le sens de la flèche F1, elle prend appui sur la zone 15 de l'enveloppe du contacteur, située en dessous d'une borne de raccordement de la bobine, et, par effet de levier, elle repousse le verrou 9 en comprimant le ressort 11. En continuant son mouvement dans le sens de la flèche F2, elle provoque le désengagement par rapport au rail 2, de l'embase du contacteur, c'est-à-dire de l'ensemble démarreur.

Pour assurer un bon guidage de la lame 14 dans le verrou 9 et éviter qu'elle ne s'échappe lors du déverrouillage, la partie du verrou constituant la paroi du trou 13 est avantageusement en forme de crochet (Fig. 3) dont l'extrémité se termine au voisinage de l'axe du trou de fixation 13. De préférence, la partie du verrou 9 constituant la paroi extérieure du trou 13 présente du côté intérieur deux faces perpendiculaires, qui permettent d'introduire la lame 14 du tournevis parallèlement au rail et d'assurer une meilleure portée de la lame sur le verrou.

Du fait que la paroi du trou 13 fait partie intégrante du verrou 9, le trou 13 est utilisé à la fois comme trou de passage d'une vis de fixation de l'embase et comme encoche de manoeuvre du verrou.

L'invention a été décrite en détail dans le cas du trou 13 qui se situe à la partie inférieure droite de l'embase du contacteur. Elle s'applique aussi au cas des autres coins de l'embase. Il est également prévu que le verrou 9 constitue la paroi extérieure de deux trous de l'embase, ces trous pouvant indifféremment jouer le rôle d'encoche de manoeuvre du verrou.

## Revendications

1. Contacteur (1) à verrou de fixation (9) sur un rail (2), comportant une embase (6) sensiblement rectangulaire présentant au voisinage de ses coins des trous (12,13) pour le passage de vis de fixation sur un support, et munie d'un verrou (9) pour sa fixation sur un rail profilé (2), ledit verrou (9) étant susceptible d'être ouvert à l'aide d'un outil (14) pour libérer l'embase (6) du rail (2), caractérisé en ce qu'une partie du verrou (9) constitue une paroi extérieure pour l'un (13) au moins desdits trous (12,13) de l'embase (6), le trou (13) lui-même constituant une encoche destinée à recevoir ledit outil (14).

2. Contacteur (1) selon la revendication 1, caractérisé en ce que la partie du verrou (9) constituant le paroi extétieure d'un trou (12,13) est recourbée en forme de crochet.

3. Contacteur (1) selon la revendication 2, caractérisé en ce que la partie du verrou (9) constituant la paroi extérieure d'un trou (12,13) présente du côté intérieur deux faces perpendiculaires.

## Patentansprüche

1. Schaltschütz (1) mit Verriegelung (9) zur Befestigung auf einer Schiene (2), mit einem im wesentlichen rechteckigen Sockel (6), der in der Nähe seiner Ecken Löcher (12, 13) für den Durchtritt von Schrauben zur Befestigung auf einem Träger aufweist und mit einer Verriegelung (9) für seine Befestigung auf einer profilierten Schiene (2) ausgerüstet ist, wobei die Verriegelung (9) mit Hilfe eines Werkzeugs (14) geöffnet werden kann, um den Sockel (6) von der Schiene (2) zu lösen, dadurch gekennzeichnet, daß ein Teil der Verriegelung (9) eine Außenwand für mindestens eines (13) der Löcher (12, 13) des Sockels (6) bildet, und das Loch (13) selbst eine Nut bildet, die zur Aufnahme des Werkzeugs (14) dient.

2. Schaltschütz (1) nach Anspruch 1, dadurch gekennzeichnet, daß der Teil der Verriegelung (9), der die Außenwand eines Lochs (12, 13) bildet, in Form eines Hakens gekrümmt ist.

3. Schaltschütz (1) nach Anspruch 2, dadurch gekennzeichnet, daß der Teil der Verriegelung (9), der die Außenwand eines Lochs (12, 13) bildet, an der Innenseite zwei senkrechte Flächen aufweist.

## Claims

1. A contactor (1) with a rail (2) mounting latch (9), comprising an essentially rectangular base (16) which close to its edges presents holes (12, 13) for letting screws through for fastening onto a support, and provided with a latch (9) for its mounting onto a profiled rail (2), the latch (9) being apt to be opened by means of a tool (14) so as to detach the base (6) from the rail (2), characterised in that one part of the latch (9) constitutes an external wall of at least one (13) of said holes (12, 13) in the base (6), this hole in itself constituting a recess for receiving said tool (14).

2. The contactor as claimed in claim 1, characterised in that the part of the latch (9) that constitutes the external wall of a hole (12, 13) is bent in the form of a hook.

3. The contactor as claimed in claim 2, characterised in that the part of the latch (9) that constitutes the external wall of a hole (12, 13) presents on its inner side two perpendicular surfaces.
